# EUROPÄISCHE PATENTSCHRIFT

(11) **EP 3 744 496 B1**
(45) Veröffentlichungstag und Bekanntmachung des Hinweises auf die Patenterteilung: **12.01.2022**
(21) Anmeldenummer: 19020353.9
(22) Anmeldetag: 29.05.2019
(51) Int. Cl.: B29C 44/34, B29B 7/72, B29C 44/60, B29C 44/44

(54) **VERFAHREN UND EINRICHTUNG ZUR REGULIERUNG DES SCHÄUMUNGSGRADES VON IMPRÄGNIERTEM KUNSTSTOFFGRANULAT ZUR HERSTELLUNG VON GESCHÄUMTEM KUNSTSTOFFTEILEN**
METHOD AND APPARATUS FOR REGULATING THE FOAMING LEVEL OF IMPREGNATED PLASTIC GRANULES FOR THE PREPARATION OF FOAMED PLASTIC PARTS
PROCÉDÉ ET DISPOSITIF DE RÉGULATION DU TAUX DE MOUSSAGE DES GRANULÉS EN MATIÈRE PLASTIQUES IMPRÉGNÉS DESTINÉ À LA FABRICATION DE PARTIES MOUSSÉES EN MATIÈRE PLASTIQUE

(43) Veröffentlichungstag der Anmeldung: 02.12.2020
(73) Patentinhaber: Linde GmbH, 82049 Pullach (DE); Kunststoff-Institut Lüdenscheid (KIMW GmbH), 58507 Lüdenscheid (DE)
(72) Erfinder: Heninger, Rolf, 85635 Höhenkirchen-Siegertsbrunn (DE); Praller, Andreas, 82110 Germering (DE); Kürten, Andreas, 58644 Iserlohn (DE); Szych, Pawel, 81241 München (DE)
(74) Vertreter: Gellner, Bernd

(56) Entgegenhaltungen:
- DE-A1-102006 010 354
- DE-A1-102012 100 100
- US-A- 3 088 713

## Beschreibung

Die Erfindung betrifft ein Verfahren sowie eine Einrichtung zur Herstellung eines geschäumten Kunststoffteils.

Bei einem derartigen Verfahren wird üblicherweise ein Kunststoffgranulat, mit einem Treibmittel, z.B. CO₂, imprägniert, bevor das solchermaßen behandelte Granulat für die Herstellung eines Bauteils, beispielsweise durch Spritzgießen in eine Form oder mittels Extrudieren durch eine Düse (Matrize), verwendet wird. Aufgrund des Treibmittels entstehen beim Formen des Kunststoffteils aus dem erhitzten bzw. fließfähigen Granulat feine Blasen, so dass das Kunststoffteil nach dem Erstarren letztlich eine Zellstruktur aufweist.

In der Regel wird die Qualität bzw. der Schäumungsgrad als Prozentwert der Gewichtsreduzierung des geschäumten, spritzgegossenen oder extrudierten Kunststoffprodukts aus imprägniertem Kunststoffgranulat beim Konditionieren und Imprägnieren durch Temperatur, Zeit und Druck gesteuert.

Diese indirekte Kontrolle der Qualität bzw. des Schäumungsgrades durch Konditionierungs- und Imprägnierungsparameter funktioniert jedoch immer nur für die jeweilige Charge des Kunststoffgranulats bzw. für eine bestimmte Lagerzeit, die vom Kunststoff und von der Lagerung abhängig ist. Einflüsse durch z.B. wechselndes Imprägnierverhalten von Kunststoffen sowie durch den Verlust des Imprägnierungsgrades über die Lagerzeit und abhängig von der Art der Lagerung, z.B. längere Verweilzeit im Materialtrichter an der Spritzgussmaschine oder am Extruder, können zu einer Veränderung der Qualität bzw. des Schäumungsgrades von Kunststoffteilen führen.

Die DE 10 2012 100100 A1 offenbart ein Verfahren gemäß dem Oberbegriff des Anspruchs 1 und eine Einrichtung gemäß dem Oberbegriff des Anspruchs 9.

Der Erfindung liegt hiervon ausgehend die Aufgabe zugrunde, ein Verfahren und eine Einrichtung zum Herstellen von geschäumten Kunststoffteilen bereitzustellen, so dass eine verbesserte Kontrolle des Schäumungsgrades der hergestellten Kunststoffteile möglich ist.

Diese Aufgabe wird durch ein Verfahren mit den Merkmalen des Anspruchs 1 sowie durch eine Einrichtung mit den Merkmalen des Anspruchs 9 gelöst. Vorteilhafte Ausgestaltungen des jeweiligen Erfindungsaspekts sind in den Unteransprüchen angegeben und werden nachfolgend beschrieben.

Gemäß Anspruch 1 wird ein Verfahren zur Herstellung eines geschäumten Kunststoffteils offenbart, wobei ein Kunststoffgranulatgemisch bereitgestellt wird, indem zumindest ein erstes Kunststoffgranulat, das mit einem Treibmittel imprägniert ist, mit einem zweiten Kunststoffgranulat, dass das Treibmittel nicht aufweist, vermischt wird, wobei das Kunststoffgranulatgemisch zur Herstellung zumindest eines geschäumten Kunststoffteils erhitzt und in Form gebracht wird (z.B. durch Spritzgießen, Extrudieren oder Blasformen), wobei das mindestens eine Kunststoffteil aufgrund des Treibmittels geschäumt wird und eine Zellstruktur erhält, und wobei ein Istwert einer Regelgröße, die mit dem Schäumungsgrad des mindestens einen geschäumten Kunststoffteils korreliert, bestimmt wird und durch Einstellen eines Mischverhältnisses des ersten und des zweiten Kunststoffgranulats so geregelt wird, dass der Istwert einen vordefinierten Sollwert anstrebt.

Unter dem Begriff "imprägnieren" ist hierbei im Rahmen der vorliegenden Erfindung zu verstehen, dass das Treibmittel von dem ersten Kunststoffgranulat absorbiert wird. Das Treibmittel wird dabei zumindest teilweise vom Kunststoffgranulat aufgenommen bzw. an dieses gebunden. Dies kann auch als Beladen des Kunststoffgranulates mit dem Treibmittel bezeichnet werden. Zum Imprägnieren kann das erste Kunststoffgranulat in einem Behälter bei einer geeigneten Temperatur und einem geeigneten Druck mit dem vorzugsweise gasförmigen Treibmittel beaufschlagt werden. Ein Imprägnierungsgrad kann durch entsprechende Wahl der Temperatur und des Drucks in dem Behälter sowie der Imprägnierungszeit eingestellt werden. Weiterhin wird im Rahmen der vorliegenden Erfindung unter dem Schäumungsgrad der Prozentwert der Gewichtsreduzierung des in Form gebrachten (z.B. durch Schäumen, Spritzgießen oder Extrudieren) Kunststoffteils gegenüber dem nicht geschäumten Werkstoff verstanden.

Unter einem Kunststoffgranulat wird dabei ein Material verstanden, das eine Vielzahl an festen Partikeln (z.B. Körner, Kugeln, Pulver, Pellets etc.) aufweist, die den Kunststoff aufweisen oder aus diesem gebildet sind. Das Treibmittel zeichnet sich insbesondere dadurch aus, dass es beim Druckabfall beim Einspritzen in eine Kavität oder beim Verlassen einer Düse (z.B. Extrusionsdüse) Blasen erzeugt, die dem erstarten Kunststoff eine Zellstruktur verleihen. Das jeweilige Kunststoffgranulat kann Zusatzstoffe aufweisen.

Gemäß einer Ausführungsform des Verfahrens ist vorgesehen, dass mehrere Kunststoffteile hergestellt werden, wobei der Istwert der Regelgröße für das jeweilige Kunststoffteil bestimmt wird.

Weiterhin ist gemäß einer Ausführungsform vorgesehen, dass das mindestens eine Kunststoffteil in einem kontinuierlichen Extrusionsprozess extrudiert wird, wobei der Istwert der Regelgröße kontinuierlich oder in Intervallen bestimmt wird.

Weiterhin ist gemäß einer Ausführungsform des Verfahrens vorgesehen, dass das Mischverhältnis von imprägniertem und nicht imprägniertem Kunststoffgranulat unter Verwendung eines der folgenden Verfahren beeinflusst wird:
- Messung der Masse bzw. eines Gewichts des mindestens einen Kunststoffteils;
- Bestrahlen des mindestens eine Kunststoffteils mit Ultraschallwellen;
- Bestrahlen des mindestens einen Kunststoffbauteils mit Röntgenstrahlung;
- Bestrahlen des mindestens einen Kunststoffbauteils mit Terahertz-Strahlung;
- Messen einer geometrischen Größe des mindestens einen Kunststoffteils (z.B. Durchmesser, Volumen etc.).

In einer weiteren Ausführung kann die Regelgröße einer der folgenden Parameter sein bzw. kann aus einem der folgenden Parameter abgeleitet sein:
- eine Schmelztemperatur des aufgeschmolzenen Kunststoffgranulatgemischs,
- ein Staudruck, mit dem das aufgeschmolzene Kunststoffgranulatgemischs in einem Schneckenvorraum komprimiert wird,
- ein Dosiervolumen des aufgeschmolzenen Kunststoffgranulatgemischs,
- ein Einspritzvolumen des aufgeschmolzenen Kunststoffgranulatgemischs,
- ein Einspritzdruck, mit dem das aufgeschmolzene Kunststoffgranulatgemisch in eine Form injiziert wird,
- ein Extrusionsdruck, mit dem das aufgeschmolzene Kunststoffgranulatgemisch beim Extrudieren durch eine Matrize gedrückt wird,
- eine Einspritzgeschwindigkeit, mit der das aufgeschmolzene Kunststoffgranulatgemisch in eine Form fließt,
- ein Forminnendruck in der mit dem aufgeschmolzenen Kunststoffgranulatgemisch gefüllten Kavität,
- ein Nachdruck in einer mit dem aufgeschmolzenen Kunststoffgranulatgemisch gefüllten Kavität.

Gemäß einer Ausführungsform des Verfahrens ist vorgesehen, dass das Treibmittel einen der folgenden Stoffe aufweist oder durch einen der folgenden Stoffe gebildet wird: Kohlendioxid (CO₂), Stickstoff (N₂), Argon (Ar), Helium (He), ein Kohlenwasserstoff, Butan, Pentan, Mischungen eines oder mehrerer Gase mit CO₂.

Weiterhin ist gemäß einer Ausführungsform des Verfahrens vorgesehen, dass das erste und/oder das zweite Kunststoffgranulat eines der folgenden Stoffe aufweist oder durch einen der folgenden Stoffe gebildet ist:
- einen thermoplastischen Kunststoff;
- einen duroplastischen Kunststoff;
- Polypropylen,
- Polystyrol,
- Polyamid,
- PBT,
- PET,
- PES,
- expandierbare, mit einem Treibmittel (z.B. Pentan) beladene Kunststoffe, z.B. aus Polypropylen, Polystyrol, Polyamid, PBT, PET oder PES zur Herstellung expandierter Partikelschäume (z.B. EPP, EPS, etc.).

Ein weiterer Aspekt der vorliegenden Erfindung betrifft eine Einrichtung zum Herstellen eines geschäumten Kunststoffteils, wobei die Einrichtung vorzugsweise zur Durchführung des erfindungsgemäßen Verfahrens ausgebildet ist, mit:
- einem ersten Behälter, der dazu ausgebildet ist, ein erstes Kunststoffgranulat, das mit einem Treibmittel imprägniert ist, zu speichern,
- einem zweiten Behälter, der dazu ausgebildet ist, ein zweites Kunststoffgranulat zu speichern,
- einer Mischeinrichtung, die dazu ausgebildet ist, das erste und das zweite Kunststoffgranulat unter Erzeugung eines Kunststoffgranulatgemischs zu mischen,
- einer Formgebungseinrichtung, die dazu ausgebildet ist, das Kunststoffgranulatgemisch zum Erzeugen eines geschäumten Kunststoffteils zu erhitzen und in Form zu bringen,
- einer Messeinrichtung, die dazu ausgebildet ist, einen Istwert zumindest einer Regelgröße zu bestimmen, die mit dem Schäumungsgrad des geschäumten Kunststoffteils korreliert, und
- einer Regelungseinheit, die dazu ausgebildet ist, die Mischeinrichtung dazu zu veranlassen, ein Mischverhältnis des ersten und des zweiten Kunststoffgranulats einzustellen, so dass der Istwert einen vordefinierten Sollwert anstrebt.

Die oben im Einzelnen beschriebenen Verfahrensschritte bzw. Ausführungsformen des erfindungsgemäßen Verfahrens können auch zur Weiterbildung der erfindungsgemäßen Einrichtung dienen. Insofern ist die Einrichtung dazu ausgebildet, den jeweilige Verfahrensschritt bzw. die jeweilige Ausführungsform des Verfahrens auszuführen.

Weitere Merkmale und Vorteile der Erfindung werden nachfolgend anhand der Figurenbeschreibung von Ausführungsbeispielen erläutert. Es zeigen:

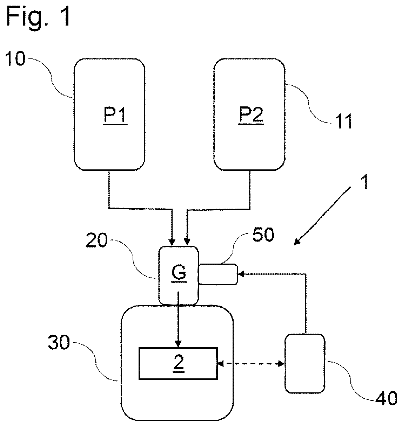

- Fig. 1: eine schematische Darstellung einer Ausführungsform des erfindungsgemäßen Verfahrens bzw. der erfindungsgemäßen Einrichtung.

Figur 1 zeigt eine schematische Darstellung einer Ausführungsform eines erfindungsgemäßen Verfahrens zur Herstellung eines geschäumten Kunststoffteils 2, wobei ein Kunststoffgranulatgemisch G bereitgestellt wird, indem zumindest ein erstes Kunststoffgranulat P1, das mit einem Treibmittel imprägniert ist und in einem ersten Behälter 10 gespeichert ist, mittels einer Mischeinrichtung 20 mit einem zweiten Kunststoffgranulat P2 gemischt wird, das in einem zweiten Behälter 11 gespeichert ist. Das Kunststoffgranulatgemisch G wird sodann zur Herstellung zumindest eines geschäumten Kunststoffteils 2 erhitzt und mittels einer Formgebungseinrichtung 30 in Form gebracht, z.B. durch Spritzgießen, Extrudieren, Blasformen oder einen sonstigen Formgebungsprozess, wobei mittels einer Messeinrichtung 40 ein Istwert einer Regelgröße, die mit dem Schäumungsgrad des mindestens einen geschäumten Kunststoffteils 2 korreliert, bestimmt wird und durch Einstellen des Mischverhältnisses des ersten und des zweiten Kunststoffgranulats P1, P2 so geregelt wird, dass der Istwert einen vordefinierten Sollwert anstrebt. Zum Einstellen des Mischverhältnisses ist eine Regeleinheit 50 vorgesehen, die die Mischreinrichtung 20 dazu veranlasst, das Mischverhältnis so einzustellen, dass der Istwert einen gewünschten Wert (Sollwert) der Regelgröße anstrebt.

Die Einrichtung 1 kann dazu ausgebildet sein, mehrere Kunststoffteile 2 herzustellen, wobei der Istwert mittels der Messeinrichtung 40 für jedes hergestellte Kunststoffteil 2 bestimmt wird. Auf diese Weise kann das Mischverhältnis so beeinflusst werden, dass die hergestellten Teile 2 eine gleichbleibende Qualität bzw. Schäumungsgrad aufweisen. Alternativ hierzu kann das Kunststoffteil 2 auch als zusammenhängendes Halbzeug bzw. Teil extrudiert werden, wobei der Istwert der Regelgröße kontinuierlich oder in vorgegebenen Zeitintervallen bestimmt werden kann, um bei der Herstellung des Kunststoffteils (z.B. extrudiertes Profil 2) Einfluss auf den Schäumungsgrad zu nehmen.

Diese Messung/Bestimmung des Istwerts der Regelgröße kann auf der Basis von Gewicht, Ultraschallwellen, Röntgenstrahlung, Terrahertz-Strahlung, einer Abmessung des betreffenden Kunststoffteils 2 oder einer beliebigen anderen Größe durchgeführt werden. Andere Methoden sind auch denkbar. Da der Zustand der Imprägnierung die Viskosität der Kunststoffgranulatschmelze G in der Formgebungseinrichtung 30 (z.B. Spritzgusswerkzeug oder Extrusionswerkzeug mit Matrize) beeinflusst, sind Prozessparameter bzw. Regelgrößen wie z.B. der Einspritzdruck/Extrusionsdruck, die Einspritzgeschwindigkeit oder der Innendruck der Granulatschmelze G zur Überwachung und Regelung des Schäumungsgrades des Kunststoffteils 2 verwendbar.

Die Messungen des Istwerts können z.B. beim Spritzgießen für jedes Spritzgussteil 2 oder im Intervall durchgeführt werden. Bei Extrusionsprofilen 2 kann die Messung z.B. kontinuierlich oder im Intervall durchgeführt werden. Durch das entsprechende Mischen von imprägniertem und nicht imprägniertem Granulat P1, P2 in der Mischeinrichtung 20 kann der gewünschte Schäumungsgrad während der laufenden Produktion erreicht werden.

Die vorliegende Erfindung erlaubt im Ergebnis eine direkte und präzise Regelung des Schäumungsgrades von geschäumten Kunststoffteilen 2.

## Patentansprüche

1. Verfahren zur Herstellung eines geschäumten Kunststoffteils (2), wobei ein Kunststoffgranulatgemisch (G) bereitgestellt wird, indem zumindest ein erstes Kunststoffgranulat (P1), das mit einem Treibmittel imprägniert ist, mit einem zweiten Kunststoffgranulat (P2) gemischt wird, wobei das Kunststoffgranulatgemisch (G) zur Herstellung zumindest eines geschäumten Kunststoffteils (2) geschmolzen und in Form gebracht wird, **dadurch gekennzeichnet, dass** ein Istwert zumindest einer Regelgröße, die mit dem Schäumungsgrad des mindestens einen geschäumten Kunststoffteils (2) korreliert, bestimmt wird und durch Einstellen eines Mischverhältnisses des ersten und des zweiten Kunststoffgranulats (P1, P2) so geregelt wird, dass der Istwert einen vordefinierten Sollwert anstrebt.

2. Verfahren nach Anspruch 1, **wobei** mehrere Kunststoffteile (2) hergestellt werden, wobei der Istwert der Regelgröße für jedes Kunststoffteil (2) bestimmt wird.

3. Verfahren nach Anspruch 1, **wobei** das mindestens eine Kunststoffteil (2) in Form eines zusammenhängenden Kunststoffteils extrudiert wird, wobei der Istwert der Regelgröße laufend oder in Intervallen bestimmt wird.

4. Verfahren nach einem der vorhergehenden Ansprüche, **wobei** die mindestens eine Regelgröße unter Verwendung eines der folgenden Verfahren ermittelt wird:
Messung der Masse des mindestens einen Kunststoffteils (2); Bestrahlen des
mindestens einen Kunststoffteils (2) mit Ultraschallwellen; Bestrahlen des
mindestens einen Kunststoffteils (2) mit Röntgenstrahlung; Bestrahlen des
mindestens einen Kunststoffteils (2) mit Terahertz-Strahlung; Messen einer
geometrischen Größe des mindestens einen Kunststoffteils (2).

5. Verfahren nach einem der vorhergehenden Ansprüche, **wobei** die Regelgröße einer der folgenden Parameter ist:
- eine Schmelztemperatur des aufgeschmolzenen Kunststoffgranulatgemischs,
- ein Staudruck, mit dem das aufgeschmolzene Kunststoffgranulatgemisch in einem Schneckenvorraum komprimiert wird,
- ein Dosiervolumen des aufgeschmolzenen Kunststoffgranulatgemischs,
- ein Einspritzvolumen des aufgeschmolzenen Kunststoffgranulatgemischs,
- ein Einspritzdruck, mit dem das aufgeschmolzene Kunststoffgranulatgemisch in eine Form injiziert wird,
- ein Extrusionsdruck, mit dem das aufgeschmolzene Kunststoffgranulatgemisch beim Extrudieren durch eine Matrize gedrückt wird,
- eine Einspritzgeschwindigkeit, mit der das aufgeschmolzene Kunststoffgranulatgemisch in eine Form fließt,
- ein Forminnendruck in einer mit dem aufgeschmolzenen Kunststoffgranulatgemisch gefüllten Kavität,
- ein Nachdruck in einer mit dem aufgeschmolzenen Kunststoffgranulatgemisch gefüllten Kavität.

6. Verfahren nach einem der vorhergehenden Ansprüche, **wobei** das Treibmittel einen der folgenden Stoffe aufweist oder durch einen der folgenden Stoffe gebildet wird: Kohlendioxid, Stickstoff, Argon, Helium, ein Kohlenwasserstoff, Butan, Pentan, Mischungen eines oder mehrerer Gase mit CO₂.

7. Verfahren nach einem der vorhergehenden Ansprüche, **wobei** das erste und/oder das zweite Kunststoffgranulat eines der folgenden Stoffe aufweist oder durch einen der folgenden Stoffe gebildet ist: einen thermoplastischen Kunststoff; einen duroplastischen Kunststoff; einen expandierbaren, mit Treibmittel beladenen Kunststoff, insbesondere aus Polypropylen oder Polystyrol sowie insbesondere zur Herstellung eines Partikelschaums, insbesondere EPP oder EPS.

8. Verfahren nach einem der vorhergehenden Ansprüche, **wobei** das geschmolzene Kunststoffgranulatgemisch durch einen der folgenden Prozesse in Form gebracht wird: Extrusion, Spritzgießen, Blasformen.

9. Einrichtung zum Herstellen eines geschäumten Kunststoffteils, insbesondere zur Durchführung des Verfahrens nach einem der vorhergehenden Ansprüche, mit:
- einem ersten Behälter (10), der dazu ausgebildet ist, ein erstes Kunststoffgranulat (P1), das mit einem Treibmittel imprägniert ist, zu speichern,
- einem zweiten Behälter (11), der dazu ausgebildet ist, ein zweites Kunststoffgranulat (P2) zu speichern,
- einer Mischeinrichtung (20), die dazu ausgebildet ist, das erste und das zweite Kunststoffgranulat (P1, P2) unter Erzeugung eines Kunststoffgranulatgemischs (G) zu mischen,
- einer Formgebungseinrichtung (30), die dazu ausgebildet ist, das Kunststoffgranulatgemisch (G) zum Erzeugen eines geschäumten Kunststoffteils (2) zu schmelzen und in Form zu bringen, **dadurch gekennzeichnet, dass** die Einrichtung weiterhin enthält:
- einer Messeinrichtung (40), die dazu ausgebildet ist, einen Istwert zumindest einer Regelgröße zu bestimmen, die mit dem Schäumungsgrad des geschäumten Kunststoffteils (2) korreliert, und
- einer Regelungseinheit (50), die dazu ausgebildet ist, die Mischeinrichtung (20) dazu zu veranlassen, ein Mischverhältnis des ersten und des zweiten Kunststoffgranulats (P1, P2) einzustellen, so dass der Istwert einen vordefinierten Sollwert anstrebt.

## Claims

1. Method for preparing a foamed plastic part (2), wherein a mixture of plastic granules (G) is provided in that at least first plastic granules (P1) impregnated with a propellant are mixed with second plastic granules (P2), wherein the mixture of plastic granules (G) is melted and molded to prepare at least one foamed plastic part (2),
**characterized in that** an actual value of at least one control variable that correlates with the foaming level of the at least one foamed plastic part (2) is determined and is regulated by adjusting a mixing ratio of the first and the second plastic granules (P1, P2) such that the actual value approaches a predefined target value.

2. Method according to Claim 1, **wherein** multiple plastic parts (2) are prepared, wherein the actual value of the control variable is determined for each plastic part (2).

3. Method according to Claim 1, **wherein** the at least one plastic part (2) is extruded in the form of a continuous plastic part, wherein the actual value of the control variable is determined continuously or at intervals.

4. Method according to one of the preceding claims, **wherein** the at least one control variable is ascertained by using one of the following methods: measuring the mass of the at least one plastic part (2); irradiating the at least one plastic part (2) with ultrasonic waves; irradiating the at least one plastic part (2) with x-ray radiation; irradiating the at least one plastic part (2) with terahertz radiation; measuring a geometric quantity of the at least one plastic part (2).

5. Method according to one of the preceding claims, **wherein** the control variable is one of the following parameters:
- a melting temperature of the melted mixture of plastic granules,
- a dynamic pressure with which the melted mixture of plastic granules is compressed in a space in front of the screw,
- a metered volume of the melted mixture of plastic granules,
- an injection volume of the melted mixture of plastic granules,
- an injection pressure with which the melted mixture of plastic granules is injected into a mold,
- an extrusion pressure with which the melted mixture of plastic granules is pressed through a die upon extrusion,
- an injection rate with which the melted mixture of plastic granules flows into a mold,
- an internal mold pressure in a cavity filled with the melted mixture of plastic granules,
- a hold pressure in a cavity filled with the melted mixture of plastic granules.

6. Method according to one of the preceding claims, **wherein** the propellant has one of the following substances or is formed by one of the following substances: carbon dioxide, nitrogen, argon, helium, a hydrocarbon, butane, pentane, mixtures of one or more gases with CO₂.

7. Method according to one of the preceding claims, **wherein** the first and/or the second plastic granules have one of the following substances or are formed by one of the following substances: a thermoplastic; a thermosetting plastic; an expandable plastic charged with propellant, in particular made of polypropylene or polystyrene and in particular for preparing a particle foam, in particular EPP or EPS.

8. Method according to one of the preceding claims, **wherein** the molten mixture of plastic granules is molded by one of the following processes: extrusion, injection molding, blow molding.

9. Apparatus for preparing a foamed plastic part, in particular for implementing the method according to one of the preceding claims, comprising:
- a first container (10) that is designed to store first plastic granules (P1) impregnated with a propellant,
- a second container (11) that is designed to store second plastic granules (P2),
- a mixing apparatus (20) that is designed to mix the first and the second plastic granules (P1, P2) while producing a mixture of plastic granules (G),
- a shaping apparatus (30) that is designed to melt and mold the mixture of plastic granules (G) in order to produce a foamed plastic part (2),
**characterized in that** the apparatus furthermore contains:
- a measuring apparatus (40) that is designed to determine an actual value of at least one control variable that correlates with the foaming level of the foamed plastic part (2), and
- a control unit (50) that is designed to induce the mixing apparatus (20) to adjust a mixing ratio of the first and the second plastic granules (P1, P2) so that the actual value approaches a predefined target value.

## Revendications

1. Procédé de fabrication d'une partie moussée en matière plastique (2), dans lequel est préparé un mélange de granulés en matière plastique (G), en ce qu'au moins un premier granulé en matière plastique (P1), imprégné d'un agent gonflant, est mélangé avec un second granulé en matière plastique (P2), dans lequel le mélange de granulés en matière plastique (G) est fondu et mis en forme pour la fabrication d'au moins une partie moussée en matière plastique (2),
**caractérisé en ce qu'**une valeur réelle d'au moins une variable de régulation, qui est corrélée au degré de moussage de l'au moins une partie moussée en matière plastique (2), est déterminée et est régulée par réglage d'un rapport de mélange des premier et second granulés en matière plastique (P1, P2) de sorte que la valeur réelle s'approche d'une valeur de consigne prédéfinie.

2. Procédé selon la revendication 1, **dans lequel** plusieurs parties en matière plastique (2) sont fabriquées, dans lequel la valeur réelle de la variable de régulation est déterminée pour chaque partie en matière plastique (2).

3. Procédé selon la revendication 1, **dans lequel** l'au moins une partie en matière plastique (2) est extrudée sous la forme d'une partie en matière plastique cohérente, dans lequel la valeur réelle de la variable de régulation est déterminée en continu ou à intervalles.

4. Procédé selon l'une quelconque des revendications précédentes, **dans lequel** l'au moins une variable de régulation est déterminée en utilisant l'un des procédés suivants : mesure de la masse de l'au moins une partie en matière plastique (2) ; irradiation de l'au moins une partie en matière plastique (2) avec des ondes ultrasonores ; irradiation de l'au moins une pièce en matière plastique (2) avec des rayons X ; irradiation de l'au moins une partie en matière plastique (2) avec un rayonnement térahertz ; mesure d'une variable géométrique de l'au moins une partie en matière plastique (2).

5. Procédé selon l'une quelconque des revendications précédentes, **dans lequel** la variable de régulation est l'un des paramètres suivants :
- une température de fusion du mélange de granulés en matière plastique fondu,
- une pression dynamique, avec laquelle le mélange de granulés en matière plastique fondu est comprimé dans un espace à vis sans fin,
- un volume de dosage du mélange de granulés en matière plastique fondu,
- un volume d'injection du mélange de granulés en matière plastique fondu,
- une pression d'injection, avec laquelle le mélange de granulés en matière plastique fondu est injecté dans un moule,
- une pression d'extrusion, avec laquelle le mélange de granulés en matière plastique est pressé lors de l'extrusion à travers une matrice,
- une vitesse d'injection, avec laquelle le mélange de granulés en matière plastique fondu s'écoule dans un moule,
- une pression interne de moule dans une cavité remplie du mélange de granulés en matière plastique fondu,
- une pression ultérieure dans une cavité remplie du mélange de granulés en matière plastique fondu.

6. Procédé selon l'une quelconque des revendications précédentes, **dans lequel** l'agent gonflant présente une des matières suivantes ou est formé par l'une des matières suivantes : du dioxyde de carbone, de l'azote, de l'argon, de l'hélium, un hydrocarbure, du butane, du pentane, des mélanges d'un ou de plusieurs gaz avec du CO₂.

7. Procédé selon l'une quelconque des revendications précédentes, **dans lequel** le premier et/ou le second granulés en matière plastique présentent une des matières suivantes ou sont formés par l'une des matières suivantes : une matière plastique thermoplastique ; une matière plastique thermodurcissable ; une matière plastique chargée en agent gonflant expansible, en particulier en polypropylène ou polystyrène, ainsi qu'en particulier pour la fabrication d'une mousse de particules, en particulier EPP ou EPS.

8. Procédé selon l'une quelconque des revendications précédentes, **dans lequel** le mélange de granulés en matière plastique fondu est mis en forme par l'un des processus suivants : extrusion, moulage par injection, moulage par soufflage.

9. Dispositif de fabrication d'une partie moussée en matière plastique, en particulier pour la réalisation du procédé selon l'une quelconque des revendications précédentes, comprenant :
- un premier récipient (10), conçu pour stocker un premier granulé en matière plastique (P1) imprégné d'un agent gonflant,
- un second récipient (11), conçu pour stocker un second granulé en matière plastique (P2),
- un dispositif de mélange (20), conçu pour mélanger le premier et le second granulés en matière plastique (P1, P2) pour produire un mélange de granulés en matière plastique (G),
- un dispositif de mise en forme (30), conçu pour faire fondre et mettre en forme le mélange de granulés en matière plastique (G) afin de produire une partie moussée en matière plastique (2),
**caractérisé en ce que** le dispositif contient en outre :
- un dispositif de mesure (40), conçu pour déterminer une valeur réelle d'au moins une variable de régulation, qui est corrélée au degré de moussage de la partie moussée en matière plastique (2) et
- une unité de régulation (50), conçue pour ordonner au dispositif de mesure (20) de régler un rapport de mélange des premier et second granulés en matière plastique (P1, P2) de manière à ce que la valeur réelle s'approche d'une valeur de consigne prédéfinie.
